# FASCICULE DE BREVET EUROPEEN

(11) **EP 2 431 641 B1**
(45) Date de publication et mention de la délivrance du brevet: **05.06.2013**
(21) Numéro de dépôt: 11181487.7
(22) Date de dépôt: 15.09.2011
(51) Int. Cl.: F16L 5/00, E03C 1/02

(54) **Dispositif de fixation d'un raccord pour conduite de transport de fluide sur une cloison**
Befestigungsvorrichtung für einen Anschluss eines fluidführenden Rohres an einer Hohlwand
Fixing device of a connection piece of a fluid carrying pipe to a hollow wall

(30) Priorité: 15.09.2010 FR 1057357
(43) Date de publication de la demande: 21.03.2012
(73) Titulaire: Somatherm, 24000 Perigueux (FR)
(72) Inventeur: Fillioux, Mathieu, 24460 Agonac (FR); Frances, Fabienne, 24000 Perigueux (FR); Cambot-Courrau, Yves, 24000 Perigueux (FR)
(74) Mandataire: Henrich, Christel

(56) Documents cités:
- EP-A2- 1 775 814
- EP-B1- 1 348 815

## Description

L'invention concerne un dispositif de fixation, sur une cloison, d'un raccord pour une conduite de transport de fluide.

Plus particulièrement, l'invention concerne un tel dispositif, destiné à être monté dans un trou pratiqué dans l'épaisseur de la cloison.

L'invention s'applique notamment à des raccords pour conduites d'installation sanitaires ou pour conduites de chauffage.

On connaît aujourd'hui différentes méthodes pour la fixation, sur une cloison, d'un raccord pour une conduite de transport de fluide. Une méthode de fixation courante consiste à aménager, à l'arrière de la cloison, une trappe de visite sur laquelle vient se fixer le raccord. Cette méthode exclut toutefois le cas des doubles cloisons. Elle nécessite l'intervention simultanée de deux opérateurs, placés de chaque côté de la cloison, et s'avère par ailleurs peu esthétique. Enfin, la réalisation d'un trou traversant, qui n'est à aucun moment rebouché ou renforcé, affaiblit considérablement la cloison.

Une autre méthode connue consiste à pratiquer une saignée dans la cloison pour y faire passer la conduite, puis à fixer un raccord au fond de la saignée, par vissage si celui-ci est équipé d'une fixation arrière, ou par scellement au plâtre dans le cas contraire. Souvent, il est cependant nécessaire d'utiliser des supports intermédiaires pour pouvoir fixer convenablement le raccord et faire en sorte que celui-ci affleure à l'extérieur de la cloison afin de recevoir une robinetterie. Pour faciliter la fixation, on utilise quelques fois un boîtier, noyé dans la maçonnerie, sur lequel sont fixées la ou les conduites, mais cette méthode reste laborieuse.

Une autre solution connue, aisément applicable aux doubles cloisons, consiste à utiliser une plaque support sur laquelle on fixe le raccord et qui ensuite est fixée sur l'avant de la cloison. Un tel système est décrit par exemple dans le brevet EP 1 348 815 B1. Mais ce système nécessite lui aussi la réalisation, dans la cloison, d'un trou de diamètre suffisant pour le passage du raccord, qui affaiblit la cloison.

Le document EP 1 775 814 A2 montre un autre dispositif de fixation connu.

L'invention a pour but de proposer une nouvelle solution pour la fixation d'un raccord pour une conduite de transport de fluide sur une cloison, permettant une fixation aisée par un côté seulement de la cloison et le renforcement de la cloison au niveau du trou de passage du raccord et de la conduite.

En particulier, l'invention a pour objet un dispositif de fixation d'un raccord pour conduite de transport de fluide sur une cloison creuse tel que défini dans la revendication 1, Un tel dispositif comporte un support encastrable comprenant un noyau apte à être encastré au moins partiellement dans ladite cloison, des moyens d'adaptation du raccord sur ledit support encastrable, des moyens externe de positionnement du support encastrable par rapport à la cloison, destinés à venir en appui sur la face avant de la cloison, des moyens d'appui interne destinés à venir en appui sur la face arrière de la cloison, au moins un rail de guidage le long duquel peuvent coulisser lesdits moyens d'appui interne, ledit rail de guidage s'étendant depuis ledit noyau et comprenant au moins une portion de pré guidage se rapprochant progressivement de l'axe du support encastrable suivant un sens s'éloignant dudit support encastrable, et des moyens de déplacement des moyens d'appui interne le long du rail de guidage, par quoi lesdits moyens d'appui interne peuvent, en coulissant le long du rail de guidage, passer d'une position rétractée dans laquelle ils n'entravent pas l'encastrement du support encastrable dans ladite cloison, à une position déployée, dans laquelle ils peuvent prendre appui contre la face arrière de la cloison.

Le dispositif de fixation selon la présente invention peut être facilement monté par un côté seulement de la cloison.

Par ailleurs, contrairement aux dispositifs de l'art antérieur utilisables sur doubles cloisons, qui se contentent de recouvrir en surface l'ouverture du trou de passage, le dispositif de fixation selon l'invention comprend des moyens d'appui internes, aptes à venir en appui contre la face arrière de la cloison. Le dispositif est donc aisément maintenu en position, la cloison étant prise en étau entre les moyens externe de positionnement et les moyens d'appui interne qui peuvent tous deux présenter d'importantes surfaces d'interaction avec les faces respectivement avant et arrière de la cloison.

Selon un aspect de l'invention, les moyens d'appui interne comprennent au moins une mâchoire comportant une surface d'appui destinée à venir prendre appui sur la face arrière de la cloison et au moins un trou taraudé, et les moyens de déplacement comprennent au moins une vis montée sur le support encastrable et coopérant avec le trou taraudé de sorte que la rotation de la vis entraîne le coulissement de la mâchoire le long du rail de guidage.

Outre la portion de pré guidage, le rail de guidage peut également comprendre une portion de réglage située entre le noyau et la portion de pré-guidage, ladite portion de réglage s'étendant dans une direction parallèle à celle de l'axe du support encastrable. Les moyens d'appui interne, dans leur position déployée, peuvent coulisser le long de la portion de réglage afin de régler la distance les séparant des moyens externes de positionnement. Le même dispositif peut ainsi être utilisé pour des cloisons d'épaisseurs variables.

Selon un autre aspect avantageux, les moyens d'appui interne peuvent comprendre des moyens de guidage final aptes à coopérer avec la paroi interne du trou de la cloison lorsque les moyens d'appui interne viennent en contact avec la face arrière de la cloison. Par exemple, les moyens de guidage final comprennent une nervure courbe faisant saillie depuis la surface d'appui de la mâchoire. Grâce à ces dispositions, une fois la mâchoire suffisamment engagée sur la portion de réglage, celle-ci est guidée non plus seulement par le ou les rails de guidage mais également par la nervure courbe qui, en coopérant avec le trou de la cloison, permet son bon positionnement par rapport à la cloison. Une fois le dispositif en position montée, la portion de guidage final de la mâchoire constitue en outre un moyen de renfort de la cloison.

Selon un autre aspect, les moyens d'appui interne comprennent deux mâchoires disposées symétriquement par rapport à un plan axial du dispositif et aptes à se déplacer respectivement le long d'au moins un rail de guidage, dans des directions radialement opposées. On notera que dans la présente demande, sauf précision contraire, un plan axial est un plan contenant l'axe du dispositif.

Chacune desdites mâchoires peut par exemple être montée coulissante le long d'au moins deux rails de guidage parallèles.

Selon un aspect de l'invention, le rail de guidage fait saillie à partir de la face arrière du noyau et les moyens d'appui sont engagés sur ledit rail de guidage. En particulier, les moyens d'appui peuvent être enfilés sur le rail de guidage. Par exemple, chaque mâchoire peut être engagée sur au moins un rail de guidage par une échancrure ou par une ouverture la traversant de part et d'autre, de manière à s'étendre latéralement vers l'extérieur par rapport audit rail de guidage. La mâchoire entoure alors partiellement le rail de guidage et déborde largement de celui-ci. Ses dimensions et notamment celles de sa surface d'appui avant, sont de ce fait indépendantes de la structure ou des dimensions du rail de guidage. La surface d'interférence entre chaque mâchoire et la face arrière de la cloison peut ainsi être augmentée, et la tenue mécanique du dispositif à l'intérieur du trou de la cloison, renforcée. Dans le cas particulier où une mâchoire est montée coulissante le long d'au moins deux rails de guidage, elle peut entourer au moins partiellement chacun de ces rails et déborder au-delà de ces rails, de sorte que ses dimensions ne sont pas limitées par la distance séparant les rails.

Selon un premier mode de réalisation, chaque rail de guidage comporte une glissière, et chaque mâchoire comporte au moins un pion de coulissement configuré pour pouvoir coulisser dans la glissière dudit rail.

Chaque pion de coulissement de chaque mâchoire peut alors avantageusement présenter une section transversale circulaire, de sorte qu'une fois montée sur le rail, la mâchoire peut, non seulement coulisser le long du rail, mais également pivoter autour de l'axe du pion de coulissement. De cette façon, la mâchoire peut passer facilement de la portion de pré guidage à la portion de réglage du rail de guidage sous l'effet du vissage de la vis, tout en restant sensiblement parallèle à la face arrière de la cloison au cours de son déplacement.

Selon un autre aspect avantageux, la glissière peut comporter, sur la portion de pré guidage, une surépaisseur ponctuelle positionnée et dimensionnée de telle sorte que le pion de coulissement est placé d'un côté de cette surépaisseur lorsque la mâchoire se trouve dans sa position rétractée et qu'il franchit cette surépaisseur lorsque la mâchoire se déplace vers sa position déployée sous l'effet du vissage de la vis. De cette manière, on évite, lors du montage, que la ou les mâchoires ne se déplacent radialement vers l'extérieur et ne viennent empêcher l'encastrement du dispositif dans le trou formé préalablement dans la cloison.

Selon un second mode de réalisation, chaque rail de guidage comporte au moins une saillie à section transversale rectangulaire s'étendant le long dudit rail, et chaque mâchoire comporte au moins deux bossages situés de part et d'autre de ladite saillie une fois la mâchoire engagée sur le rail, ce par quoi la mâchoire peut s'articuler avec jeu de part et d'autre de ladite saillie.

Selon un troisième mode de réalisation, chaque mâchoire présente au moins une ouverture débouchant sur ses faces avant et arrière, la mâchoire est apte à être engagée sur un rail par ladite ouverture, et la largeur de cette ouverture est supérieure à la largeur du rail de guidage, permettant un jeu fonctionnel entre la mâchoire et le rail de guidage.

Dans les premier, second et troisième modes de réalisation décrits, non seulement chaque mâchoire est apte à se translater le long du au moins un rail sur lequel elle est montée, mais elle s'articule également par rapport audit rail de façon à franchir aisément la ou les portion(s) incurvée(s) du rail (par exemple entre la portion de pré guidage et la portion de réglage).

Plusieurs modes ou exemples de réalisation sont décrits dans le présent exposé. Toutefois, sauf précision contraire, les caractéristiques décrites en relation avec un mode ou un exemple de réalisation quelconque peuvent être appliquées à un autre mode ou exemple de réalisation.

L'invention et ses avantages apparaîtront mieux à la lecture de la description détaillée qui suit, d'exemples de réalisation de l'invention donnés à titre illustratif et non limitatif. Cette description fait référence aux figures annexées, sur lesquelles :
- La figure 1 est une vue en perspective, éclatée, par l'avant, d'un dispositif de fixation selon un premier mode de réalisation de l'invention, ainsi que d'un raccord pouvant être fixé à l'aide de ce dispositif ;
- La figure 2 est une vue en perspective, éclatée, par l'arrière, du dispositif de fixation et du raccord de la figure 1 ;
- Les figures 3 et 4 sont des vues en coupe selon III-III du dispositif de fixation de la figure 1, sur lesquelles les mâchoires sont respectivement dans leur position rétractée et déployée ;
- La figure 5 est une vue en coupe selon V-V du dispositif de fixation de la figure 1, montrant le système de blocage des mâchoires lorsque celles-ci sont dans leur position rétractée ;
- les figures 6 à 9 sont des vues en coupe de différentes étapes de fixation sur une cloison du dispositif de la figure 1 ;
- les figures 10 et 11 sont des vues en perspective, respectivement avant et arrière, du dispositif de fixation de la figure 1, en position montée ;
- la figure 12 illustre une vue partielle, en perspective, d'un dispositif de fixation selon un second mode de réalisation de l'invention ;
- la figure 13 est une vue en coupe partielle, selon XIII, du dispositif de la figure 12 ;
- la figure 14 illustre une vue partielle, en perspective, d'un dispositif de fixation selon un troisième mode de réalisation de l'invention ;
- la figure 15 est une vue en coupe partielle, selon XV, du dispositif de la figure 14.

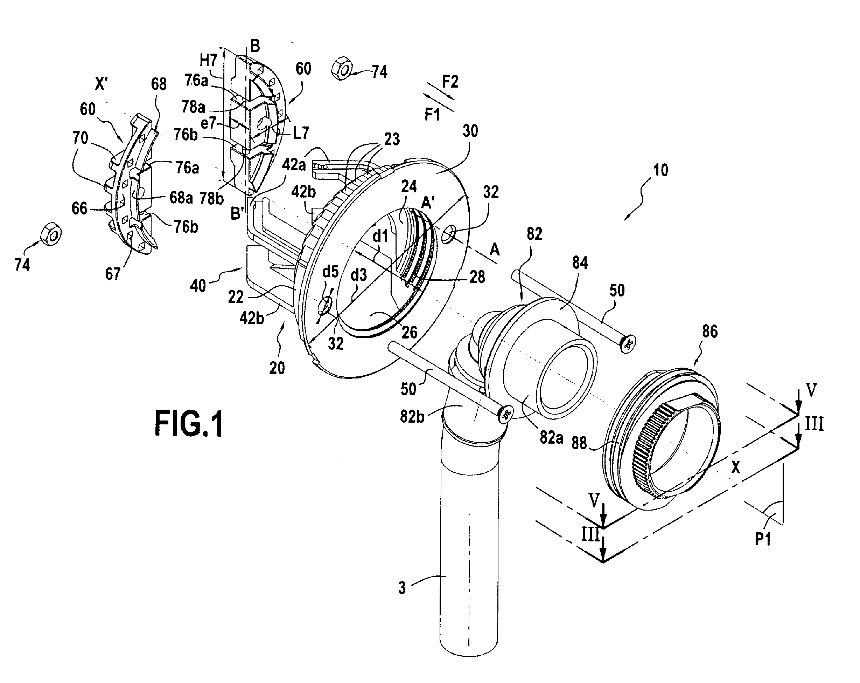

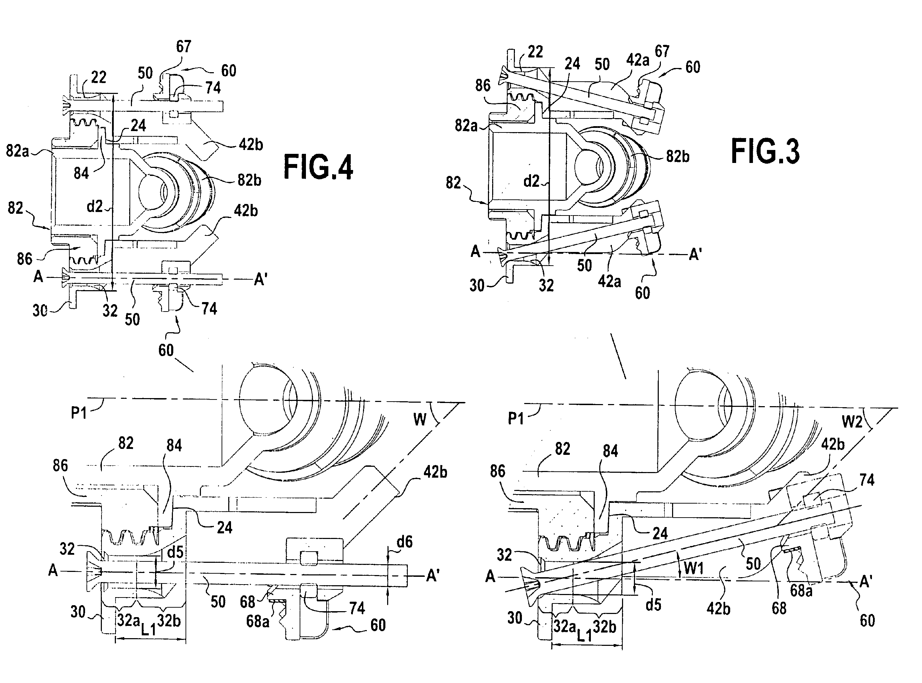

La figure 1 est une vue éclatée d'un dispositif 10 selon un premier mode de réalisation de l'invention, pour la fixation d'un raccord 82 sur une cloison 1 (la cloison 1, ainsi que le montage du dispositif 10 sur un trou 4 de cette cloison 1, seront décrits plus en détail en référence aux figures 3 à 9).

Le dispositif de fixation 10 comprend un support encastrable 20 d'axe X-X', muni de moyens externe de positionnement, composés dans l'exemple d'une collerette externe 30, destinés à prendre appui contre la face avant 1a de la cloison 1, d'un noyau d'encastrement 22 destiné à être encastré dans le trou 4 de la cloison 1, et, à son extrémité arrière, de rails de guidage 42a, 42b. Le dispositif 10 comprend également des moyens d'appui interne, composés dans l'exemple de deux butées mobiles ci-après appelées mâchoires 60, pouvant coulisser le long des rails 42a, 42b. La dispositif 10 comprend également deux vis 50 montées sur le support encastrable 20, et formant moyens de déplacement des mâchoires 60 le long des rails 42a, 42b. Enfin, le dispositif de fixation 10 comprend un écrou de verrouillage 86 apte à coopérer avec le support encastrable 20 afin de bloquer le raccord 82 sur ledit support encastrable 20, en fin de montage.

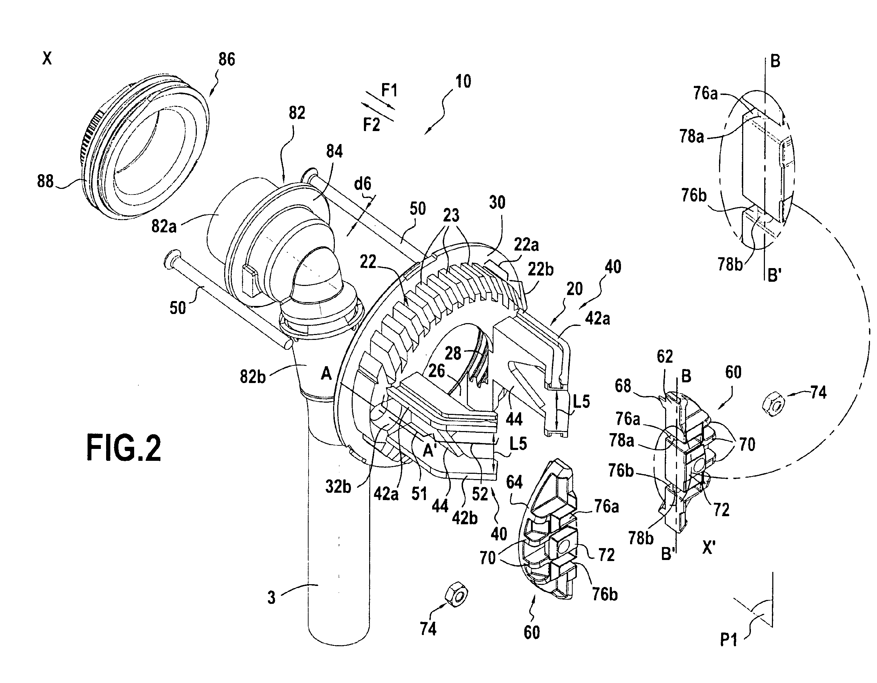

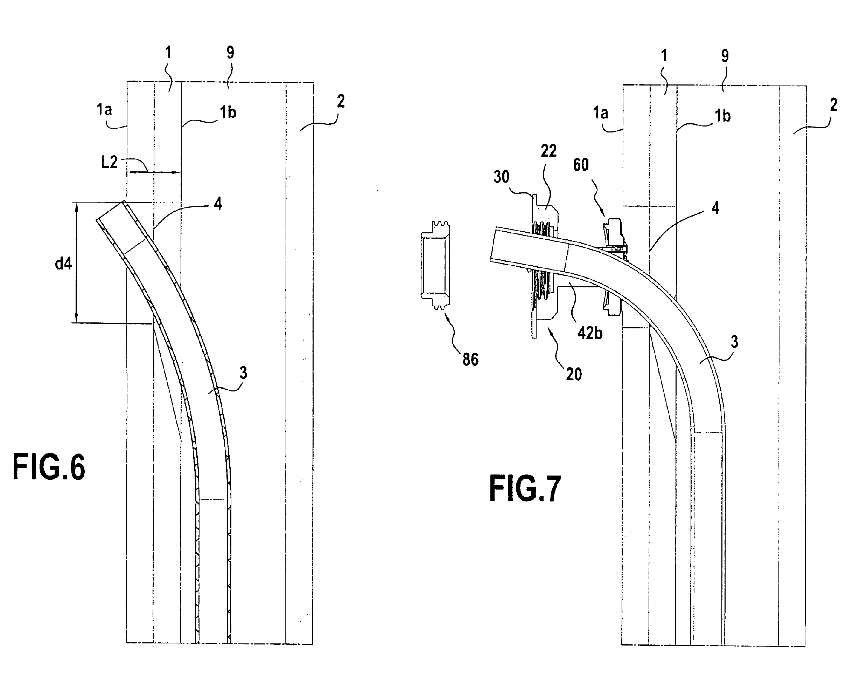

Dans toute la description qui va suivre, l'arrière du dispositif de fixation 10 est défini comme étant dirigé, selon la direction de l'axe X-X', dans le sens d'insertion F1 du dispositif dans le trou 4 de la cloison 1 (voir les figures 6 à 9). L'avant du dispositif 10 est défini comme étant dirigé dans le sens F2 opposé à F1 (voir les flèches F1 et F2 sur les figures 1 et 2).

Dans la suite, on parlera en outre de «côté inférieur» et de «côté supérieur» du dispositif 10, en tenant compte de son orientation sur les dessins. Cette terminologie n'est cependant pas limitative, et le dispositif 10 pourra être orienté différemment lors du montage.

Par ailleurs, le dispositif de fixation 10 présentant une symétrie par rapport au plan axial P1 représenté sur les figures 1 et 2, les éléments identiques de part et d'autre de ce plan de symétrie comportent les mêmes références numériques et ne seront décrits qu'une seule fois.

Chaque élément du dispositif de fixation 10 va à présent être décrit plus en détail en référence aux figures 1 à 5.

Le support encastrable 20 comporte, à son extrémité avant, la collerette externe 30, de diamètre intérieur d1 et de diamètre extérieur d3, destinée à venir prendre appui contre la face avant 1a de la cloison 1. On comprendra aisément que la résistance à l'arrachement du support encastrable 20 une fois monté, est d'autant plus grande que le diamètre extérieur d3 de la collerette externe 30 est important.

Cette collerette externe 30 est prolongée, vers l'arrière, par le noyau 22, qui présente dans l'exemple une forme de douille d'axe X-X'.

Comme illustré sur les figures 2 à 4, le noyau 22 comprend un premier tronçon 22a de diamètre externe d2, prolongé, à son extrémité arrière, par un second tronçon 22b à profil externe tronconique.

Sa face radiale externe est constituée d'une pluralité de nervures 23, destinées à réaliser un premier blocage en rotation du support encastrable 20 lors de son insertion dans le trou 4 de la cloison 1.

Une échancrure 26 s'étendant sur toute la longueur L1 du noyau 22, dans la direction axiale X-X', lui confère une forme de U renversé, qui permet le passage du raccord 82 lors du montage. A son extrémité arrière notamment, le noyau 22 est terminé par un épaulement interne 24 en forme de U renversé, servant à l'adaptation du raccord 82 comme il sera expliqué plus en détail dans la suite.

Dans l'exemple, la collerette externe 30 est formée en une seule pièce avec le noyau 22.

Comme illustré sur les figures 1 à 4, un taraudage 28 est formé sur la face radiale interne du support encastrable 20, depuis l'extrémité avant de la collerette externe 30 jusqu'à l'épaulement interne 24 du noyau 22. La fonction de ce taraudage 28 sera décrite plus en détail dans la suite.

Comme illustré sur la figure 1, deux trous traversants 32, non taraudés, sont en outre formés dans le support encastrable 20, de part et d'autre de l'échancrure 26. Dans l'exemple, ces deux trous 32 sont diamétralement opposés.

Les figures 3 et 4, qui sont des vues en coupe du dispositif 10, montrent plus en détail les trous 32. Chaque trou 32 s'étend selon un axe A-A' parallèle à l'axe X-X' et comprend un premier tronçon 32a de diamètre interne constant d5, débouchant à l'extrémité avant de la collerette externe 30, et un second tronçon 32b situé dans le prolongement du premier tronçon 32a et s'évasant progressivement en direction de l'arrière du noyau 22, où il débouche.

Chaque trou traversant 32 est destiné à recevoir une vis 50 dont le diamètre d6 est suffisamment inférieur au diamètre interne d5 du premier tronçon 32a, pour lui assurer un certain débattement (l'angle d'inclinaison W1 de la vis 50 par rapport à l'axe A-A' est illustré notamment sur la figure 3). La vis 50 est ainsi montée sur le support encastrable 20 avec une liaison rotule. L'intérêt de ce montage ressortira de la suite de la description.

Comme illustré sur la figure 2, deux paires de rails de guidage 40, symétriques par rapport au plan de symétrie P1, font saillie depuis le fond 24 du noyau 22 en direction de l'arrière du support encastrable 20.

Pour des raisons de simplification, seule une paire de rails 40 est décrite en détail ci-après.

Dans l'exemple, la paire de rails de guidage 40 comprend un rail supérieur 42a et un rail inférieur 42b, à section en « U », disposés de part et d'autre d'un trou 32 du support encastrable 20, respectivement au-dessus et en-dessous de ce trou 32. Les rails supérieur 42a et inférieur 42b sont séparés par une distance L5, mais reliés par une entretoise 44 qui permet de rigidifier la structure.

Chaque rail 42a, 42b comprend un premier tronçon 51 formant portion de réglage, s'étendant selon une direction parallèle à l'axe X-X', depuis le fond du noyau 22.

Chaque rail 42a, 42b comprend en outre, dans le prolongement de ce premier tronçon 51, un second tronçon 52 formant portion de pré-guidage, orienté vers l'intérieur et vers l'arrière du support encastrable 20 (i.e. se rapprochant progressivement du plan de symétrie P1 du dispositif). Dans l'exemple, le second tronçon 52 s'étend de manière rectiligne, selon une direction formant un angle W2 avec le plan de symétrie P1 (voir les figures 3 et 4).

Chaque rail de guidage 42a, 42b présente donc une forme de V, la portion de réglage 51 formant une première branche du V et la portion de pré guidage 52, la seconde branche du V. On notera que selon d'autres exemples de réalisation, le second tronçon de rail 52 peut aussi présenter une légère courbure en direction de l'intérieur du support encastrable.

Dans l'exemple illustré, le rail supérieur 42a présente une rainure formant glissière (ci-après glissière supérieure) 46a, formée dans sa face supérieure. Le rail inférieur 42b présente quant à lui une rainure formant glissière (ci-après glissière inférieure) 46b, formée dans sa face inférieure. Dans l'exemple, chaque glissière 46a, 46b est située à une distance sensiblement constante de la bordure externe du rail 42a, 42b et présente une section transversale sensiblement rectangulaire.

Comme illustré sur les figures 1, 2 et 5, chaque glissière 46a, 46b comporte par ailleurs, au niveau de l'une de ses parois latérales internes, à proximité de l'extrémité libre de la portion de pré guidage 52, une surépaisseur ponctuelle 80 dont la fonction sera décrite plus en détail dans la suite.

En outre, comme représenté sur la figure 2, chaque glissière 46a, 46b débouche à l'extrémité libre du rail, de sorte qu'il est possible d'engager, sur chaque paire de rails 40, une mâchoire 60.

Comme illustré sur les figures 1 et 2, chaque mâchoire 60 présente une forme générale de demi-disque, comprenant un rebord radial interne 62, ici sensiblement plan, et un rebord radial externe convexe 64. Sa largeur L7, son épaisseur e7 et sa hauteur H7 sont représentées sur la figure 1.

Une pluralité de nervures 70, parallèles entre elles, sont formées sur la face arrière de la mâchoire 60 et servent à la renforcer (voir la figure 2).

Sur sa face avant, la mâchoire 60 comporte une face d'appui avant 66 sensiblement plane d'où font saillie des picots 67. Cette face d'appui avant 66 est destinée à venir prendre appui contre la face arrière 1b de la paroi 1, une fois le dispositif 10 monté sur la cloison 1. Les picots 67 assurent une meilleure adhérence entre la face d'appui avant de la mâchoire 60 et la cloison 1b.

Comme illustré sur la figure 1, une nervure courbe 68, présentant une face externe convexe 68a, fait saillie depuis la face avant de chaque mâchoire 60. Après montage, une fois la face d'appui avant 66 positionnée contre la face arrière 1b de la cloison 1, la face externe convexe 68a de la nervure courbe 68 est apte à venir coopérer par complémentarité de forme avec la face interne du trou 4 et forme ainsi un moyen de guidage supplémentaire pour la mâchoire 60 et un moyen de renfort de la cloison 1.

Chaque mâchoire 60 comporte en outre, dans sa partie médiane, une cage d'écrou 72 emprisonnant un écrou 74 adapté à coopérer avec l'une des vis 50 décrites précédemment (voir la figure 2). Selon une variante de réalisation (non représentée), l'ensemble formé par la cage d'écrou 72 et l'écrou 74 peut être remplacé par un trou taraudé remplissant la même fonction, formé directement dans la partie médiane de la mâchoire 60. Cependant, l'ensemble formé par la cage d'écrou 72 et l'écrou 74 permet une sollicitation moindre de la mâchoire 60 lors du vissage de la vis 50, et lui assure une plus longue durée de vie.

Chaque mâchoire 60 comporte par ailleurs deux échancrures 76a, 76b formées dans son rebord interne 62, de chaque côté de la cage d'écrou 72.

Chaque échancrure 76a, 76b abrite un pion de coulissement 78a, 78b destiné à coulisser dans la glissière 46a, 46b d'un rail 42a, 42b. Plus particulièrement, l'échancrure supérieure 76a abrite un pion de coulissement 78a faisant saillie vers le bas depuis sa face interne supérieure, tandis que l'échancrure inférieure 76b abrite un pion de coulissement 78b faisant saillie vers le haut depuis sa face interne inférieure. On comprend aisément que l'orientation de chaque pion de coulissement 78a, 78b sera fonction de la position de la glissière 46a, 46b sur le rail de guidage 42a, 42b (i.e. sur la face supérieure ou inférieure).

Comme illustré sur la figure 2, les deux pions de coulissement 78a, 78b de la mâchoire 60 s'étendent selon un même axe B-B', et présentent une forme de révolution autour de cet axe B-B' (chaque pion de coulissement 78a, 78b présente ici une section transversale circulaire), ce qui permet à la mâchoire, une fois montée sur la rail, de pivoter légèrement autour de l'axe B-B', comme il sera décrit plus en détail dans la suite.

Une fois engagée sur les rails 42a, 42b, chaque mâchoire 60 présente donc deux degrés de liberté : l'un en translation le long des rails 42a, 42b, et l'autre en rotation autour de l'axe B-B des pions de coulissement 78a, 78b.

On notera que les dimensions de la mâchoire 60 sont telles qu'elle entoure partiellement chaque rail 42a, 42b sur lequel elle est montée et déborde largement au-delà des deux rails. Sa hauteur H7 et sa largeur L7 sont cependant limitées par le fait qu'elle ne doit pas dépasser de l'enveloppe extérieure du noyau 22 lors du montage du dispositif dans le trou de la cloison (i.e. lorsqu'elle se trouve dans sa position rétractée, à proximité de l'extrémité libre de la portion de pré guidage).

Le dispositif 10 comprend en outre un écrou de verrouillage 86, représenté sur les figures 1 et 2, qui comporte un filetage externe 88 apte à coopérer avec le taraudage 28 du noyau 22, mentionné précédemment.

Le dispositif 10 est destiné à la fixation d'un raccord 82. Comme illustré sur les figures 1 et 2, ce raccord 82 présente une portion arrière 82b, destinée à recevoir une extrémité d'une conduite 3, et une portion avant 82a sur laquelle pourra par exemple venir se fixer une robinetterie. A une distance de son extrémité avant, le raccord 82 est muni d'une collerette externe 84, apte à venir en appui sur l'épaulement interne 24 du noyau 22.

Lors du montage, le vissage de l'écrou 86 sur le support encastrable 20 permet de serrer la collerette externe 84 du raccord 82 contre l'épaulement interne 24 du noyau 22. L'épaulement interne 24 du noyau 22 et l'écrou de verrouillage 86 coopérant par vissage avec le support encastrable 20 forment ainsi des moyens d'adaptation du raccord 82.

Les éléments constituant le dispositif de fixation 10 décrit ci-dessus peuvent par exemple être réalisés dans un matériau plastique, notamment du polyamide. Selon d'autres exemples de réalisation, le système de fixation pourra être réalisé dans d'autres matériaux, métalliques par exemple.

Un exemple de montage du dispositif 10 décrit ci-dessus va à présent être décrit plus en détail en référence aux figures 6 à 9.

La figure 6 illustre une double cloison constituée d'une première cloison 1 de largeur L2 et d'une seconde cloison 2. Ces deux cloisons 1, 2 sont séparées par un espace 9 où passe une conduite 3 destinée à être raccordée à une robinetterie (non représentée) prévue du côté avant 1a de la première cloison 1. Pour le passage de la conduite 3, un trou circulaire 4 de diamètre d4 a été pratiqué dans l'épaisseur de la première cloison 1, par exemple à l'aide d'une scie cloche. Pour des raisons évidentes de simplification, la première cloison 1 sera désignée dans toute la suite par « cloison ».

Lors d'une première étape de montage illustrée sur la figure 6, la conduite 3 est passée à travers le trou circulaire 4 de la cloison 1, et tirée jusqu'à ce qu'une longueur suffisante de conduite 3 soit disponible sur le côté avant 1a de la cloison 1.

A ce stade, le support encastrable 20, le raccord 82 et l'écrou de verrouillage 86 sont désolidarisés.

Chaque mâchoire 60 est engagée sur une paire de rails 42a, 42b, et positionnée, sur chaque rail, entre l'extrémité libre de la portion de pré-guidage 52 et la surépaisseur 80 de la glissière. Une vis 50, montée sur le support encastrable 20, est par ailleurs engagée dans l'écrou 74 de chaque mâchoire 60. Comme indiqué précédemment, l'inclinaison de la vis 50 est rendu possible du fait de la forme évasée du trou 32 et de la différence de diamètre entre la vis et le trou. Le pivotement de la mâchoire 60 autour de l'axe B-B' des pions de coulissement 78a, 78b permet de limiter l'inclinaison maximale de la vis 50.

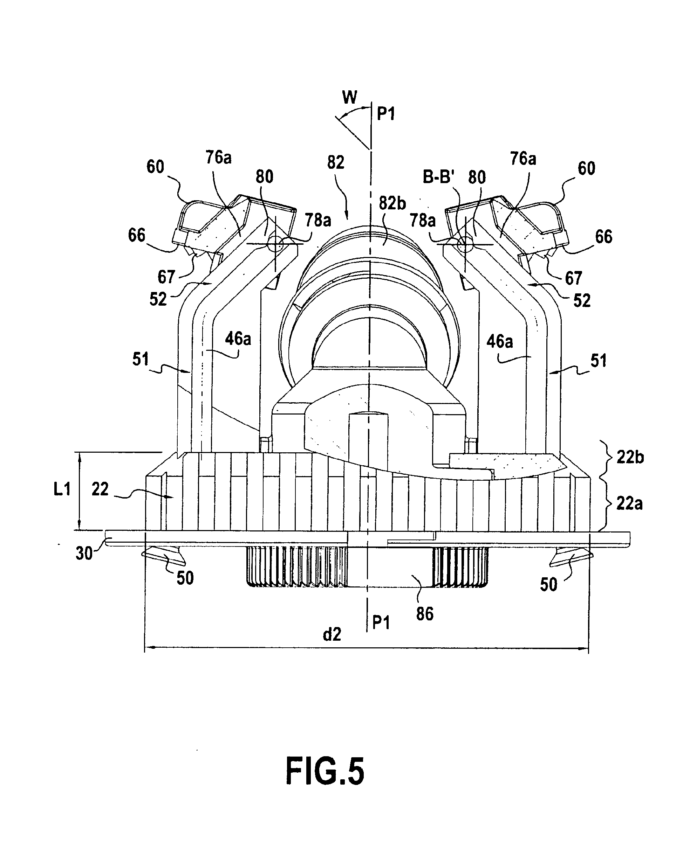

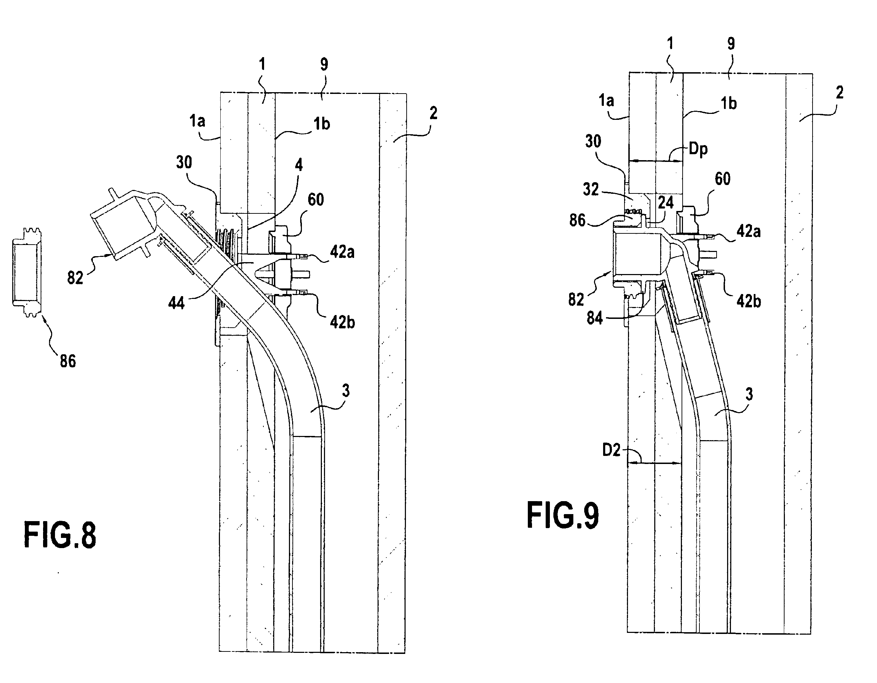

La mâchoire 60 se trouve alors dans sa position rétractée (illustrée sur les figures 3 et 5), dans laquelle elle ne dépasse pas de l'enveloppe externe du noyau 22 et n'entrave donc pas l'insertion du support encastrable 20 dans le trou 4 de la cloison 1 (voir la figure 8 décrite ci-après).

La surépaisseur 80 forme un moyen de blocage initial de la mâchoire 60 et évite qu'elle se déplace radialement vers l'extérieur durant le montage et vienne empêcher l'encastrement du dispositif 10 dans le trou 4 de la cloison 1.

Dans une seconde étape illustrée sur la figure 7, le support encastrable 20 est enfilé sur la conduite 3. L'extrémité de la conduite 3 peut alors être fixée à la partie arrière 82b du raccord 82.

Dans une troisième étape illustrée sur la figure 8, le support encastrable 20 est inséré dans le trou 4 de la cloison 1, jusqu'à ce que la collerette externe 30 vienne en appui contre la face avant 1a de la cloison 1. L'extrémité biseautée 22b du noyau 22 facilite son insertion.

Lorsque le noyau 22 est en place, il comble au moins partiellement le trou 4 de la cloison 1, du fait que le diamètre externe d2 de son premier tronçon 22a est très légèrement inférieur au diamètre interne d4 du trou 4, et renforce ainsi la cloison 1.

Par ailleurs, la longueur axiale L1 du noyau 22 étant ici inférieure à la largeur L2 de la cloison 1, son extrémité arrière ne dépasse pas de la face arrière 1b de la cloison.

Les mâchoires 60, toujours dans leur position rétractée proche de l'extrémité libre des rails 42a, 42b, sont, elles, situées hors du trou 4.

Sous l'effet du vissage des vis 50, chaque mâchoire 60 se déplace le long de la portion de pré guidage 52 en direction de la portion de réglage 51 (voir la figure 3). Les surépaisseurs 80 sont dimensionnées de telle sorte que les pions de coulissement 78a, 78b les franchissent sous l'effet du vissage de la vis 50. Chaque mâchoire 60 passe ainsi de sa position rétractée (voir la figure 3), à une position déployée (voir la figure 4) dans laquelle elle dépasse de l'enveloppe externe de la cloison 1 et empêche ainsi le retrait du support encastrable 20 hors du trou de la cloison 4.

Comme la mâchoire 60 peut pivoter légèrement autour de l'axe B-B des pions de coulissement 78a, 78b, elle peut rester sensiblement parallèle à la face arrière 1b de la cloison 1 tout au long de son déplacement depuis sa position rétractée à sa position déployée (voir les figures 3 et 4).

Une fois engagée sur la portion de réglage 51, la mâchoire 60 peut se déplacer le long du rail en direction du noyau 22, sous l'effet du vissage de la vis 50 (orientée maintenant selon l'axe A-A'), afin de régler la distance Dp entre sa surface d'appui avant 66 et la collerette externe 30 du support encastrable 20 (voir la figure 4). En fin de course, lorsque la mâchoire 60 s'est rapprochée de la face arrière 1b de la cloison 1, la nervure courbe 68 est progressivement insérée à l'intérieur du trou 4 de la cloison 1, et constitue ainsi un moyen de guidage final de la mâchoire 60. Notamment, grâce à la nervure courbe 68, il est possible d'éviter que la mâchoire 60 pivote par rapport au rail de guidage (du fait du débattement de la vis 50), et ainsi de garantir le contact entre la face d'appui avant 66 de ladite mâchoire 60 et la face arrière 1b de la cloison 1 une fois le dispositif en position montée.

La fixation du dispositif 10 sur la cloison 1 est terminée lorsque la distance Dp est égale à la largeur L2 de la cloison, c'est-à-dire lorsque la surface d'appui 66 de chaque mâchoire 60 vient au contact de la face arrière 1b de la cloison 1. La cloison 1 se trouve alors prise en étau entre la collerette externe 30 du support encastrable 20 et les mâchoires 60 (voir figure 9). La large surface d'interaction entre la surface d'appui 66 de chaque mâchoire 60 et la face arrière 1b de la cloison 1 confère au support encastrable 20 une bonne tenue mécanique.

A ce stade, chaque nervure courbe 68 faisant saillie depuis la face avant de chaque mâchoire 60 est insérée à l'intérieur du trou 4 de la cloison 1 et sa surface externe convexe 68a vient en appui contre la paroi interne du trou 4 de la cloison 1. La cloison 1 est ainsi renforcée, d'une part par le noyau 22 dont le diamètre extérieur est sensiblement égal à celui du trou 4 de la cloison 1, et d'autre part par la nervure courbe 68 de chaque mâchoire 60.

Dans une dernière étape illustrée sur la figure 9, la raccord 82 est monté sur le support encastrable 20 en passant sa portion arrière 82b, reliée à l'extrémité de la conduite 3, dans l'échancrure 26, et en plaçant sa collerette externe 84 contre l'épaulement interne 24 du châssis.

Enfin, l'écrou de verrouillage 86 est vissé dans le taraudage 28 du support encastrable 20, afin de bloquer la collerette 84 du raccord 82 contre l'épaulement interne 24.

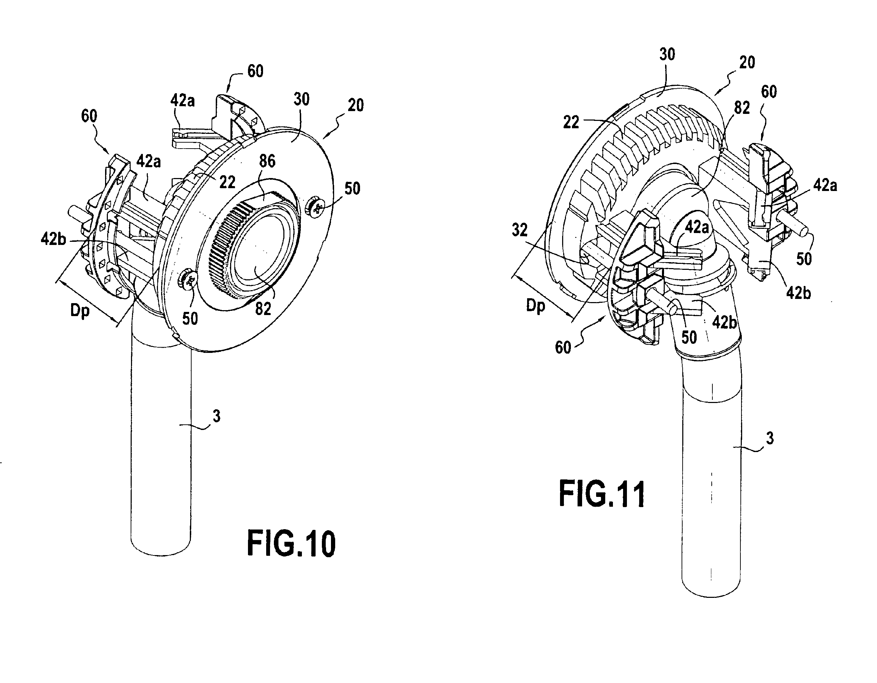

Les figures 10 et 11 sont des vues en perspective, respectivement avant et arrière, du dispositif de fixation de la figure 1, une fois la fixation du raccord 82 terminée.

Le dispositif illustré sur les figures 1 à 11 n'est pas limitatif de la présente invention.

Ainsi, bien que dans l'exemple, le support encastrable 20 soit formé en une seule pièce, selon d'autres exemples de réalisation, le noyau 22, la collerette externe 30 et les rails 42a, 42b pourront être des pièces distinctes reliées entre elles par clipsage, vissage, ou autre.

Par ailleurs, bien que dans l'exemple, le noyau 22 présente une forme de douille du fait qu'il est destiné à être inséré dans un orifice circulaire 4, il peut, dans d'autres exemples de réalisation, présenter tout profil extérieur adapté à la forme du trou sur lequel il est destiné à être monté.

Egalement, bien que dans l'exemple illustré, les glissières supérieure et inférieure soient formées respectivement dans les faces supérieure et inférieure des rails supérieur et inférieur, elles peuvent être orientées différemment selon d'autres exemples de réalisation.

Selon encore d'autres exemples de réalisation, l'un des rails ou chaque rail peut comporter une première glissière sur sa face supérieure et une autre glissière sur sa face inférieure, présentant ainsi une section transversale en H.

Dans l'exemple décrit, une surépaisseur 80 est prévue sur chaque glissière 46a, 46b. Selon d'autres exemples de réalisation, une telle surépaisseur 80 peut n'être prévue que sur l'une des deux glissières 46a, 46b (supérieure ou inférieure).

On notera également que chaque mâchoire peut être montée coulissante le long d'un nombre quelconque de rails de guidage (un seul ou plus de deux).

Enfin, on notera que les moyens d'appui interne pourront comprendre plus de deux mâchoires, avantageusement réparties dans la direction circonférentielle une fois le dispositif en position montée.

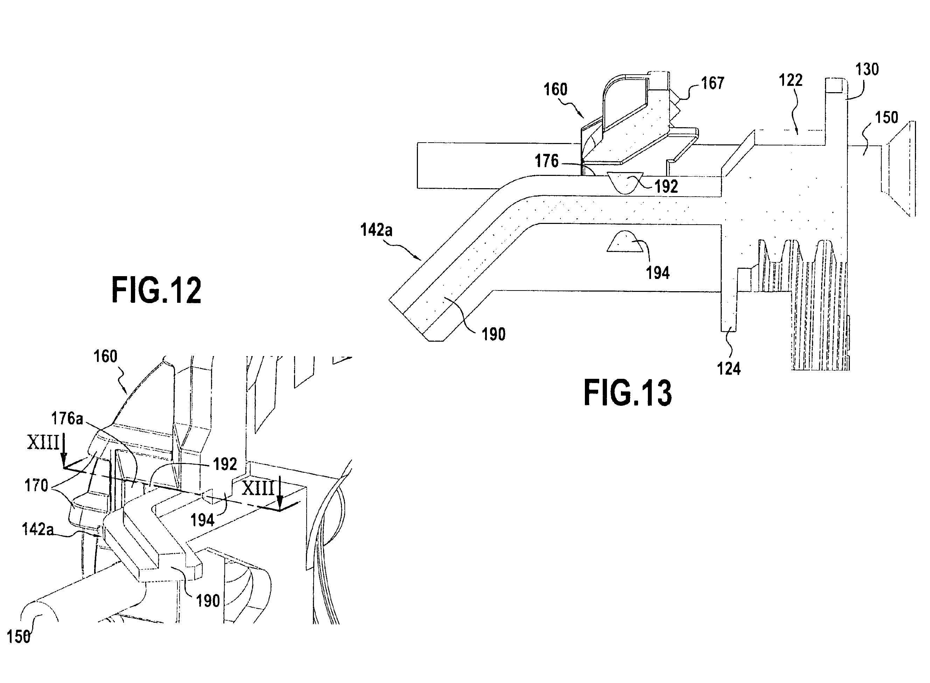

Les figures 12 et 13 illustrent un second mode de réalisation d'un dispositif de fixation selon la présente invention, dans lequel seule la forme du rail de guidage et celle de la mâchoire varient par rapport au premier mode de réalisation décrit précédemment. Les éléments communs avec le mode de réalisation précédent conservent les mêmes références numériques que sur les figures 1 à 11, incrémentées de 100.

Dans l'exemple illustré sur la figure 12, le rail de guidage 142a comporte, sur sa face supérieure, une saillie à section transversale rectangulaire 190 s'étendant le long des portions de pré guidage et de réglage du rail (i.e. selon la direction de guidage du rail), lui conférant une section transversale en T renversé.

La mâchoire 60 est engagée sur le rail de guidage 142a par une échancrure 176a. Comme il ressort des figures 12 et 13, deux bossages 192, 194, en regard l'un de l'autre, font saillie depuis la face interne supérieure de cette échancrure 176a.

Comme le montrent les figures 2 et 3, lorsque la mâchoire 160 est engagée sur le rail de guidage 142a, chaque bossage 192, 194 est orienté vers une face latérale de la saillie 90 du rail de guidage 142a. L'arrondi des bossages 192, 194 et le léger jeu conservé entre ces bossages et la saillie 190 du rail de guidage 142a permettent un débattement de la mâchoire de part et d'autre de la saillie 190.

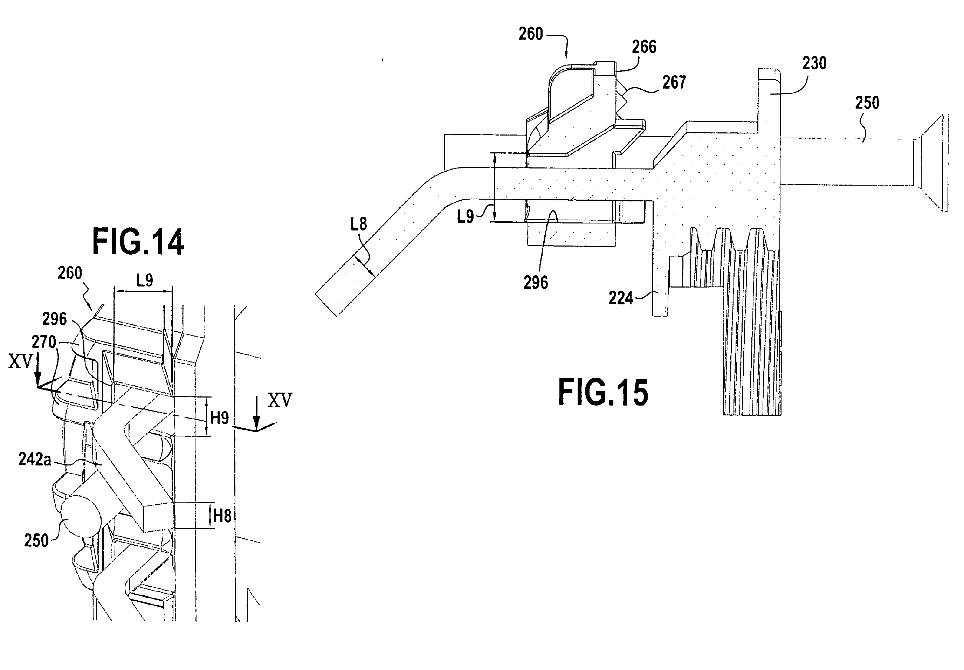

Les figures 14 et 15 illustrent encore un troisième mode de réalisation d'un dispositif de fixation selon la présente invention. Les éléments communs avec le premier mode de réalisation décrit précédemment conservent les mêmes références numériques que sur les figures 1 à 11, incrémentées de 200.

Selon ce troisième mode de réalisation, le rail de guidage 242a présente une section transversale rectangulaire constante, de hauteur H8 et de largeur L8 (voir la figure 14).

La mâchoire 260 illustrée sur la figure 14 présente, elle, une ouverture 296 débouchant sur sa face avant et sa face arrière.

L'ouverture 296 présente une section rectangulaire constante de hauteur H9 et de largeur L9.

Comme il ressort de la figure 14, la hauteur H9 de l'ouverture 296 de la mâchoire 260 est très légèrement supérieure à celle H8 du rail de guidage 242a, tandis que la largeur L9 de l'ouverture 296 est sensiblement supérieure à celle L8 du rail de guidage. De cette manière, la mâchoire 260, une fois enfilée sur le rail de guidage 242a, conserve un degré de liberté en translation le long du rail, mais également en translation dans la direction de la largeur de l'ouverture 296, créant un jeu fonctionnel entre la mâchoire 260 et le rail 242a. Ce jeu permet à la mâchoire de franchir la portion de rail incurvée qui, dans l'exemple, fait la liaison entre la portion de pré guidage et la portion de réglage.

## Revendications

1. Dispositif de fixation (10) d'un raccord (82) pour conduite de transport de fluide (3) sur une cloison (1), **caractérisé en ce qu'**il comporte :
un support encastrable (20) comprenant
un noyau (22) apte à être encastré au moins partiellement dans ladite cloison (1),
des moyens externe de positionnement (30) dudit support encastrable (20) par rapport à la cloison (1), destinés à venir en appui sur la face avant (1a) de la cloison (1), et
au moins un rail de guidage (42a, 42b; 142a; 242a) s'étendant depuis ledit noyau et faisant saillie à partir de la face arrière du noyau (22) et comprenant au moins une portion de pré guidage (52) se rapprochant progressivement de l'axe du support encastrable (20) suivant un sens s'éloignant dudit support encastrable (20),
des moyens d'adaptation (24, 86) du raccord (82) sur ledit support encastrable (20),
des moyens d'appui interne (60) destinés à venir en appui sur la face arrière (1b) de la cloison (1) et
des moyens de déplacement (50) des moyens d'appui interne (60; 160; 260) le long dudit au moins un rail de guidage (42a, 42b; 142a; 242a),
lesdits moyens d'appui interne étant engagés sur ledit rail et adaptés à coulisser le long dudit rail, et
lesdits moyens d'appui interne (60; 160; 260) pouvant, en coulissant le long du rail de guidage (42a, 42b; 142a; 242a), passer d'une position rétractée dans laquelle ils n'entravent pas l'encastrement du support encastrable (20) dans ladite cloison (1), à une position déployée, dans laquelle ils peuvent prendre appui contre la face arrière (1b) de la cloison (1).

2. Dispositif de fixation selon la revendication 1, **caractérisé en ce que** ledit au moins un rail de guidage (42a, 42b; 142a; 242a) comprend en outre une portion de réglage (51) située entre le noyau (22) et la portion de pré-guidage (52), et **en ce que** la portion de réglage (51) s'étend dans une direction parallèle à celle de l'axe (X-X') du support encastrable (20), les moyens d'appui interne (60), dans leur position déployée, pouvant coulisser le long de ladite portion de réglage (51) afin de régler la distance (Dp) les séparant des moyens externe de positionnement (30).

3. Dispositif de fixation selon la revendication 2, **caractérisé en ce que** le rail de guidage (42a, 42b; 142a; 242a) présente une forme de V, la portion de réglage (51) formant la première branche du V et la portion de pré guidage (52) formant la seconde branche du V.

4. Dispositif de fixation selon l'une quelconque des revendications 1 à 3, **caractérisé en ce que** les moyens d'appui interne (60; 160; 260) comprennent des moyens de guidage final (68) adaptés à coopérer avec la paroi interne du trou (4) de la cloison (1) dans lequel est encastré le noyau lorsque lesdits moyens d'appui interne viennent en contact avec la face arrière (1b) de la cloison (1).

5. Dispositif de fixation selon l'une quelconque des revendications 1 à 4, **caractérisé en ce que** les moyens d'appui interne (60; 160; 260) comprennent au moins une mâchoire comportant une surface d'appui (66) destinée à venir prendre appui sur la face arrière (1b) de la cloison (1) et au moins un trou taraudé (74), et les moyens de déplacement (50) comprennent au moins une vis montée sur le support encastrable (20) et coopérant avec le trou taraudé (74) de sorte que la rotation de la vis entraîne le coulissement de la mâchoire le long du rail de guidage (42a, 42b; 142a; 242a).

6. Dispositif de fixation selon la revendication 5, **caractérisé en ce que** la vis (50) est montée sur le support encastrable (20) avec une liaison rotule.

7. Dispositif de fixation selon la revendication 5 ou 6, **caractérisé en ce que** les moyens d'appui interne (60; 160; 260) comprennent deux mâchoires disposées symétriquement par rapport à un plan axial du dispositif (10) et aptes à se déplacer respectivement le long d'au moins un rail de guidage (42a, 42b; 142a; 242a), dans des directions radialement opposées.

8. Dispositif de fixation selon l'une quelconque des revendications 5 à 7, **caractérisé en ce que** chaque mâchoire (60; 160; 260) est montée coulissante le long d'au moins deux rails de guidage parallèles (42a, 42b; 142a; 242a).

9. Dispositif de fixation selon l'une quelconque des revendications 5 à 8, **caractérisé en ce que** chaque mâchoire (60; 160) est engagée sur le au moins un rail de guidage (42a, 42b; 142a) par une échancrure (76a, 76b) et ladite mâchoire s'étend latéralement vers l'extérieur par rapport audit rail de guidage.

10. Dispositif de fixation selon l'une quelconque des revendications 5 à 9, **caractérisé en ce que** chaque rail de guidage (42a, 42b) comporte au moins une glissière (46a, 46b), et chaque mâchoire (60) comporte au moins un pion de coulissement (78a, 78b) configuré pour pouvoir coulisser dans la glissière (46a, 46b) dudit rail de guidage (42a, 42b).

11. Dispositif de fixation selon la revendication 10, **caractérisé en ce que** la glissière (46a, 46b) comporte, sur la portion de pré guidage (52), une surépaisseur ponctuelle (80) positionnée et dimensionnée de telle sorte que le pion de coulissement (78a, 78b) est placé d'un côté de cette surépaisseur (80) lorsque la mâchoire (60) se trouve dans sa position rétractée et qu'il franchit cette surépaisseur (80) lorsque la mâchoire (60) se déplace vers sa position déployée sous l'effet du vissage de la vis (50).

12. Dispositif de fixation selon la revendication 10 ou 11, **caractérisé en ce que** chaque pion de coulissement (78a, 78b) de chaque mâchoire (60) présente une section transversale circulaire, de sorte que la mâchoire peut pivoter autour de l'axe (B-B') dudit pion de coulissement (78a, 78b) lorsqu'elle est montée sur le rail de guidage.

13. Dispositif de fixation selon l'une quelconque des revendications 5 à 9, **caractérisé en ce que** chaque rail de guidage (142a) comporte au moins une saillie (190) à section transversale rectangulaire s'étendant le long dudit rail (142a), et chaque mâchoire (160) comporte au moins deux bossages situés de part et d'autre de ladite saillie (190) une fois la mâchoire (160) engagée sur le rail, ce par quoi la mâchoire (160) peut s'articuler avec jeu de part et d'autre de ladite saillie (190).

14. Dispositif de fixation selon l'une quelconque des revendications 5 à 8, **caractérisé en ce que** chaque mâchoire (260) présente au moins une ouverture (296) débouchant sur ses faces avant et arrière, **en ce que** ladite mâchoire est apte à être engagée sur ledit au moins un rail par ladite ouverture, et **en ce que** la largeur (L9) de cette ouverture (296) est supérieure à la largeur (L8) du rail de guidage (242a).

15. Dispositif de fixation selon la revendication 4 et l'une quelconque des revendications 5 à 14, **caractérisé en ce que** lesdits moyens de guidage final comprennent au moins une nervure courbe (68) faisant saillie depuis la surface d'appui (66) de la au moins une mâchoire (60; 160; 60).

16. Dispositif de fixation selon l'une quelconque des revendications 1 à 15, dans lequel les moyens d'appui interne (60) sont enfilés sur le rail de guidage (42a, 42b; 142a; 242a).

## Patentansprüche

1. Vorrichtung zum Befestigen (10) eines Anschlusses (82) für eine Rohrleitung zur Fluidbeförderung (3) an einer Zwischenwand (1), **dadurch gekennzeichnet, daß** sie umfaßt:
einen Einbauhalter (20), umfassend
einen Kern (22), der geeignet ist, wenigstens teilweise in die Zwischenwand (1) eingebaut zu werden,
äußere Mittel zum Positionieren (30) des Einbauhalters (20) gegenüber der Zwischenwand (1), welche dazu bestimmt sind, an der Vorderseite (1a) der Zwischenwand (1) in Anlage zu gelangen, und
wenigstens eine Führungsschiene (42a, 42b; 142a; 242a), die sich von dem Kern aus erstreckt und von der Rückseite des Kerns (22) vorspringt sowie wenigstens einen Abschnitt zum Vorabführen (52) umfaßt, der sich der Achse des Einbauhalters (20) in einer sich von dem Einbauhalter (20) entfernenden Richtung schrittweise nähert,
Mittel zum Anbringen (24, 86) des Anschlusses (82) an dem Einbauhalter (20),
Innenanlagemittel (60), die dazu bestimmt sind, an der Rückseite (1 b) der Zwischenwand (1) in Anlage zu gelangen, sowie
Mittel zum Bewegen (50) der Innenanlagemittel (60; 160; 260) entlang der wenigstens einen Führungsschiene (42a, 42b; 142a; 242a),
wobei die Innenanlagemittel auf die Schiene aufgesteckt und dazu ausgelegt sind, entlang der Schiene zu gleiten, und
wobei die Innenanlagemittel (60; 160; 260) entlang der Führungsschiene (42a, 42b; 142a; 242a) gleitend von einer eingezogenen Position, in der sie den Einbau des Einbauhalters (20) in die Zwischenwand (1) nicht behindern, in eine ausgeklappte Position, in der sie sich an der Rückseite (1 b) der Zwischenwand (1) abstützen können, übergehen können.

2. Befestigungsvorrichtung nach Anspruch 1, **dadurch gekennzeichnet, daß** die wenigstens eine Führungsschiene (42a, 42b; 142a; 242a) ferner einen Einstellabschnitt (51), der zwischen dem Kern (22) und dem Vorabführungsabschnitt (52) gelegen ist, umfaßt, und daß der Einstellabschnitt (51) in eine zu derjenigen der Achse (X-X') des Einbauhalters (20) parallele Richtung verläuft, wobei die Innenanlagemittel (60) in ihrer ausgeklappten Position entlang dem Einstellabschnitt (51) gleiten können, um den Abstand (Dp), der sie von den äußeren Positionierungsmitteln (30) trennt, einzustellen.

3. Befestigungsvorrichtung nach Anspruch 2, **dadurch gekennzeichnet, daß** die Führungsschiene (42a, 42b; 142a; 242a) eine V-Form aufweist, wobei der Einstellabschnitt (51) den ersten Schenkel des V und der Vorabführungsabschnitt (52) den zweiten Schenkel des V bildet.

4. Befestigungsvorrichtung nach einem der Ansprüche 1 bis 3, **dadurch gekennzeichnet, daß** die Innenanlagemittel (60; 160; 260) Mittel zum abschließenden Führen (68) umfassen, die dazu ausgelegt sind, mit der Innenwand des Lochs (4) der Zwischenwand (1), in das der Kern eingebaut ist, zusammenzuwirken, wenn die Innenanlagemittel mit der Rückseite (1 b) der Zwischenwand (1) in Kontakt gelangen.

5. Befestigungsvorrichtung nach einem der Ansprüche 1 bis 4, **dadurch gekennzeichnet, daß** die Innenanlagemittel (60; 160; 260) wenigstens eine Backe umfassen, die eine Anlagefläche (66), welche dazu bestimmt ist, sich an der Rückseite (1 b) der Zwischenwand (1) abzustützen, sowie wenigstens ein Gewindeloch (74) aufweist, und die Bewegungsmittel (50) wenigstens eine Schraube umfassen, die an dem Einbauhalter (20) angebracht ist und mit dem Gewindeloch (74) zusammenwirkt, so daß die Drehung der Schraube das Gleiten der Backe entlang der Führungsschiene (42a, 42b; 142a; 242a) zur Folge hat.

6. Befestigungsvorrichtung nach Anspruch 5, **dadurch gekennzeichnet, daß** die Schraube (50) mit einer Kugelgelenkverbindung an dem Einbauhalter (20) angebracht ist.

7. Befestigungsvorrichtung nach Anspruch 5 oder 6, **dadurch gekennzeichnet, daß** die Innenanlagemittel (60; 160; 260) zwei Backen umfassen, die in Bezug auf eine Axialebene der Vorrichtung (10) symmetrisch angeordnet und geeignet sind, sich jeweils entlang wenigstens einer Führungsschiene (42a, 42b; 142a; 242a) in radial entgegengesetzte Richtungen zu bewegen.

8. Befestigungsvorrichtung nach einem der Ansprüche 5 bis 7, **dadurch gekennzeichnet, daß** jede Backe (60; 160; 260) entlang von wenigstens zwei parallelen Führungsschienen (42a, 42b; 142a; 242a) verschieblich angebracht ist.

9. Befestigungsvorrichtung nach einem der Ansprüche 5 bis 8, **dadurch gekennzeichnet, daß** jede Backe (60; 160) über eine Aussparung (76a, 76b) auf die wenigstens eine Führungsschiene (42a, 42b; 142a) aufgesteckt ist und die Backe sich in Bezug auf die Führungsschiene seitlich nach außen erstreckt.

10. Befestigungsvorrichtung nach einem der Ansprüche 5 bis 9, **dadurch gekennzeichnet, daß** jede Führungsschiene (42a, 42b) wenigstens eine Gleitbahn (46a, 46b) umfaßt und jede Backe (60) wenigstens einen Gleitstift (78a, 78b) umfaßt, der dazu ausgebildet ist, in der Gleitbahn (46a, 46b) der Führungsschiene (42a, 42b) gleiten zu können.

11. Befestigungsvorrichtung nach Anspruch 10, **dadurch gekennzeichnet, daß** die Gleitbahn (46a, 46b) an dem Vorabführungsabschnitt (52) eine punktuelle Überdicke (80) aufweist, die derart positioniert und bemessen ist, daß der Gleitstift (78a, 78b) auf einer Seite dieser Überdicke (80) liegt, wenn die Backe (60) sich in ihrer eingezogenen Position befindet, und er diese Überdicke (80) überwindet, wenn sich die Backe (60) unter der Wirkung des Schraubens der Schraube (50) in Richtung ihrer ausgeklappten Position bewegt.

12. Befestigungsvorrichtung nach Anspruch 10 oder 11, **dadurch gekennzeichnet, daß** jeder Gleitstift (78a, 78b) einer jeden Backe (60) einen kreisförmigen Querschnitt aufweist, so daß die Backe um die Achse (B-B') des Gleitstiftes (78a, 78b) schwenken kann, wenn sie an der Führungsschiene angebracht ist.

13. Befestigungsvorrichtung nach einem der Ansprüche 5 bis 9, **dadurch gekennzeichnet, daß** jede Führungsschiene (142a) wenigstens einen Vorsprung (190) mit rechteckigem Querschnitt, der sich entlang der Schiene (142a) erstreckt, umfaßt und jede Backe (160) wenigstens zwei Buckel umfaßt, die auf beiden Seiten des Vorsprungs (190) liegen, sobald die Backe (160) auf die Schiene aufgesteckt ist, wodurch die Backe (160) auf beiden Seiten des Vorsprungs (190) mit Spiel beweglich sitzen kann.

14. Befestigungsvorrichtung nach einem der Ansprüche 5 bis 8, **dadurch gekennzeichnet, daß** jede Backe (260) wenigstens eine auf ihrer Vorder- und ihrer Rückseite ausmündende Öffnung (296) aufweist, daß die Backe geeignet ist, über die Öffnung auf die wenigstens eine Schiene aufgesteckt zu werden und daß die Breite (L9) dieser Öffnung (296) größer als die Breite (L8) der Führungsschiene (242a) ist.

15. Befestigungsvorrichtung nach Anspruch 4 und einem der Ansprüche 5 bis 14, **dadurch gekennzeichnet, daß** die Mittel zum abschließenden Führen wenigstens eine gebogene Rippe (68) umfassen, die von der Anlagefläche (66) der wenigstens einen Backe (60; 160; 260) vorspringt.

16. Befestigungsvorrichtung nach einem der Ansprüche 1 bis 15, wobei die Innenanlagemittel (60) über die Führungsschiene (42a, 42b; 142a; 242a) gestreift sind.

## Claims

1. A fastener device (10) of a coupling (82) for coupling a fluid transport pipe (3) to a partition (1), the device being **characterized in that** it comprises:
· an embeddable support (20) comprising:
· a core (22) suitable for being embedded at least in part in said partition (1);
· external positioning means (30) for positioning said embeddable support (20) relative to the partition (1) and designed to bear against the front face (1a) of the partition (1); and
• at least one guide rail (42a, 42b; 142a, 242a) extending from said core and projecting from the rear face of the core (22) and including at least one pre-guidance portion (52) that progressively approaches the axis of the embeddable support (20) in a direction going away from said embeddable support (20);
• adapter means (24, 86) for adapting the coupling (82) to said embeddable support (20);
· internal bearing means (60) for bearing against the rear face (1b) of the partition (1); and
· movement means (50) for moving the internal bearing means (60; 160; 260) along said at least one guide rail (42a, 42b; 142a, 242a);
said internal bearing means being engaged on said rail and adapted to slide along said rail; and
said internal bearing means (60; 160; 260) being capable, by sliding along the guide rail (42a, 42b; 142a, 242a), of passing from a retracted position in which they do not impede the embedding of the embeddable support (20) in said partition (1) to a deployed position in which they can bear against the rear face (1b) of the partition (1).

2. A fastener device according to claim 1, **characterized in that** said at least one guide rail (42a, 42b; 142a, 242a) further includes an adjustment portion (51) situated between the core (22) and the pre-guidance portion (52), and **in that** the adjustment portion (51) extends in a direction parallel to the direction of the axis (X-X') of the embeddable support (20), the internal bearing means (60), when in their deployed position, being capable of sliding along said adjustment portion (51) in order to adjust the distance (Dp) separating them from the external positioning means (30).

3. A fastener device according to claim 2, **characterized in that** the guide rail (42a, 42b; 142a, 242a) presents a V-shape, the adjustment portion (51) forming the first branch of the V-shape and the pre-guidance portion (52) forming the second branch of the V-shape.

4. A fastener device according to any one of claims 1 to 3, **characterized in that** the internal bearing means (60; 160; 260) comprise final guidance means (68) adapted to co-operate with the inside surface of the hole (4) in the partition (1) in which the core is embedded when said internal bearing means come into contact with the rear face (1b) of the partition (1).

5. A fastener device according to any one of claims 1 to 4, **characterized in that** the internal bearing means (60; 160; 260) comprise at least one jaw including a bearing surface (66) for bearing against the rear face (1b) of the partition (1) and at least one tapped hole (74), and the movement means (50) comprise at least one screw mounted on the embeddable support (20) and co-operating with the tapped hole (74) in such a manner that turning the screw causes the jaw to slide along the guide rail (42a, 42b; 142a, 242a).

6. A fastener device according to claim 5, **characterized in that** the screw (50) is mounted on the embeddable support (20) via a ball joint.

7. A fastener device according to claim 5 or claim 6, **characterized in that** the internal bearing means (60; 160; 260) comprise two jaws arranged symmetrically about an axial plane of the device (10) and suitable for moving respectively along at least one guide rail (42a, 42b; 142a, 242a) in radially opposite directions.

8. A fastener device according to any one of claims 5 to 7, **characterized in that** each jaw (60; 160; 260) is mounted to slide along at least two parallel guide rails (42a, 42b; 142a, 242a).

9. A fastener device according to any one of claims 5 to 8, **characterized in that** each jaw (60; 160) is engaged on the at least one guide rail (42a, 42b; 142a) by a notch (76a, 76b), and said jaw extends laterally outwards relative to said guide rail.

10. A fastener device according to any one of claims 5 to 9, **characterized in that** each guide rail (42a, 42b) includes at least one slideway (46a, 46b), and each jaw (60) includes at least one slider peg (78a, 78b) configured to be capable of sliding in the slideway (46a, 46b) of said guide rail (42a, 42b).

11. A fastener device according to claim 10, **characterized in that** the slideway (46a, 46b) includes localized extra thickness (80) on the pre-guidance portion (52), the localized extra thickness (80) being positioned and dimensioned in such a manner that the slider peg (78a, 78b) is placed on one side of this extra thickness (80) when the jaw (60) is in its retracted position, and that it goes past the extra thickness (80) when the jaw (60) moves towards its deployed position under the effect of the screw (50) being screw-tightened.

12. A fastener device according to claim 10 or claim 11, **characterized in that** each slider peg (78a, 78b) of each jaw (60) presents a cross-section that is circular so that the jaw can pivot about the axis (B-B') of said slider peg (78a, 78b) when it is mounted on the guide rail.

13. A fastener device according to any one of claims 5 to 9, **characterized in that** each guide rail (142a) includes at least one projection (190) of rectangular cross-section extending along said rail (142a), and each jaw (160) includes at least two bosses situated on either side of said projection (190) once the jaw (160) is engaged on the rail, whereby the jaw (160) is hinged with clearance on either side of said projection (190).

14. A fastener device according to any one of claims 5 to 8, **characterized in that** each jaw (260) presents at least one opening (296) opening out to its front and rear faces, **in that** said jaw is suitable for being engaged on said at least one rail by said opening, and **in that** the width (L9) of said opening (296) is greater than the width (L8) of the guide rail (242a).

15. A fastener device according to claim 4 and any one of claims 5 to 14, **characterized in that** said final guide means comprise at least one curved rib (68) projecting from the bearing surface (66) of the at least one jaw (60; 160; 60).

16. A fastener device according to any one of claims 1 to 15, wherein the internal bearing means (60) are threaded on the guide rail (42a, 42b; 142a, 242a).
